# EUROPEAN PATENT APPLICATION

(11) **EP 1 505 693 A1**
(43) Date of publication of application: **09.02.2005**
(21) Application number: 04018580.3
(22) Date of filing: 05.08.2004
(51) Int. Cl.: H01R 4/70

(54) **Conductor cable joint encapsulation**

(30) Priority: 08.08.2003 GB 0318637
(71) Applicant: SICAME ELECTRICAL DEVELOPMENTS LTD, Holmfirth HD7 2TN (GB)
(72) Inventor: Francois, Pierre Adrien, 87000 Limoges (FR); Croton, David Alan, Hepworth Holmfirth HD9 1TN (GB)
(74) Representative: Wood, Graham

(57) **Abstract**

The invention relates to the provision of an encapsulation means for an electrical conductor joint. The encapsulation means includes a layer of open weave material which is wrapped around the conductor joint. An outer layer is typically provided to provide protection. A resin material is introduced into the open weave material and allowed to cure to form the encapsulation.

## Description

The invention to which this application relates is to a joint for use in the connection of electrical conductor cables, typically in end to end and/or branch configurations.

In any electrical network supply there is a need to join together ends of conductors and/or to allow conductors to be taken off the main supply and these connections typically are known as straight connections and branch connections respectively.

Conventionally, there are two types of jointing which can be used, a first, in which two plastic outer shells are held together to form an inner cavity and the cavity is filled with a resin which cures thereby encapsulating the ends of the conductor in the joined relationship within the cavity. A problem with this type of joint arrangement is that the housings are formed for particular sizes of conductors and therefore a range of different sizes and shapes of housings are required to be held in stock and then the appropriate one selected for use in accordance with the particular conductor sizes being joined together. A further problem is that this type of jointing uses a relatively large volume of resin.

An alternative form of jointing arrangement is what is known as a wrap joint. In this arrangement, a strip of glass fibre is wrapped round the joined ends of the cable so that several layers of the glass fibre matting are created typically with the aim of achieving a 10mm thickness of the matting around the joint. An outer layer of tape is then wrapped round the glass fibre and a resin is injected under significant pressure into the glass fibre from externally of the tape layer to cure with the glass fibre and create a relatively solid encapsulation of the joint. The advantage of this form of arrangement is that the same is range taking inasmuch that as long as there is sufficient glass fibre and resin, then any size of joint can be encapsulated and also a reduced amount of resin is required to be used in comparison with the previous method described. However, a problem with this arrangement is that it is difficult to achieve a satisfactory join encapsulation and as a result, this form of encapsulation only tends to be used by experienced conductor jointers. A further problem is that the resin which is required to be used in conjunction with the glass fibre, can give problems to the skin as, over prolonged use, it tends to sensitise the skin and make the same prone to skin problems such as dermatitis.

The aim of the present invention is to provide an improvement to the joint encapsulation without requiring the need for housings to be preformed and pre-sized and thereby provide a new way of encapsulating a cable joint which is an improvement on all known systems available, and which has the benefits of resin usage efficiency of the wrap joint without the associated problems.

In a first aspect of the invention there is provided a means for encapsulating a joint between at least two conductors wherein said means comprise an open weave material which is placed around the cable joint to fully surround the same, retaining means to allow the open weave material to be held in position with respect to said joint, said open weave material having an outer layer when positioned on the joint which is substantially impervious and a resin selectively introduced into the open weave material to harden and hence form the encapsulated conductor joint.

In one embodiment, the joint encapsulation means in accordance with the invention, has an impervious layer of plastics material. Typically the plastics material is bonded to the open weave material prior to fixing the same around the joint.

In one embodiment, the plastics layer extends beyond at least one edge of the open weave material and preferably, the surface of the extended portion which faces towards the open weave material has an adhesive thereon such that in use, the extended portion can be used to attach and adhere to the plastic layer and/or open weave material of another portion or piece of the said open weave material.

In one embodiment, the open weave material is an insulating material and wrapped around the joint about an axis which runs parallel with the longitudinal axis of the conductor cables. In one embodiment, the open weave material is of a length such that the same can simply be placed around the joint and the extended portion of plastic adhered along the length of the cable joint at the opposing edge of the open weave material.

In one arrangement the encapsulating means is shaped along the longitudinal edges so as to allow a shaped encapsulation to be achieved which matches and accommodates the components of the joint. In one embodiment in addition or alternatively, slots may be formed in the material such that when the encapsulating means is wrapped around the joint a minimum, or no folds or wrinkles of the material, occur.

In an alternative embodiment, the open weave material can be provided in a strip form and wound around the length of the cable joint.

In whichever embodiment, the open weave material, as it has a thickness of at least 10mm, need only be provided with one layer thickness rather than having to repeatedly wind the same around the joint as is conventionally the case with glass fibre.

Typically, one or two end pieces are provided to be wrapped around the cable conductors at the opposing ends of the open weave material encapsulation means once wrapped round the cable joint. The end pieces serve to fill the gap between the start of the insulation on the cables and the ends of the encapsulation means.

In one embodiment, a filling nozzle can be provided which passes through the plastics layer and into the open weave material such that when the encapsulating means is positioned around the joint, the resin can be introduced through the filling nozzle into the open weave material. If required, a number of nozzles can be provided at spaced intervals.

In one embodiment, the resin which is used is a polyurethane resin, preferably unfilled, or lightly filled The use of polyurethane resin means that the same is less harmful to the jointers and, as the same is significantly more liquid than the previously used resins, the same can be introduced into the open weave material using gravity feed rather than having to inject under pressure as is the case with the conventional wrap joints.

In one embodiment, an earth screen may be required to be incorporated into the joint. In this case a metallic mesh or thin metallic sheet of a suitable metal such as copper or aluminium can be incorporated. Preferably the same is incorporated in a "sandwich" configuration between the outer plastics layer and the open weave material. As required the earth screen is then connected to the earth wire or screen of the cable or cables being joined by the connector.

In a further aspect of the invention, there is provided a method for forming an encapsulation of a joint between at least two cables, said method comprising the steps of placing a portion of open weave material around the cable joint to enclose the same, joining the opposing longitudinal edges of the open weave material together, wrapping around the cables at a location at the ends of the open weave material, end pieces, adding polyurethane resin through the outer layer of the encapsulation means into the open weave material and allowing the same to cure.

Typically the cable joint includes a plurality of conductor joints.

Specific embodiments of the invention will now be described with reference to the accompanying drawings wherein:-
Figure 1 illustrates a typical cable joint which can be encapsulated in accordance with the invention;
Figure 2 illustrates a cable joint of Figure 1 with the same encapsulated in accordance with the invention;
Figures 3a - 3d illustrate the formation of a joint in accordance with the invention with encapsulating means in cross section along line A-A of Figure 2;
Figures 4a and b illustrate one possible form of encapsulating means;
Figures 5a and b illustrate a further form of encapsulating means in accordance with the invention; and
Figure 6 illustrates an alternative arrangement of the open weave material in use.

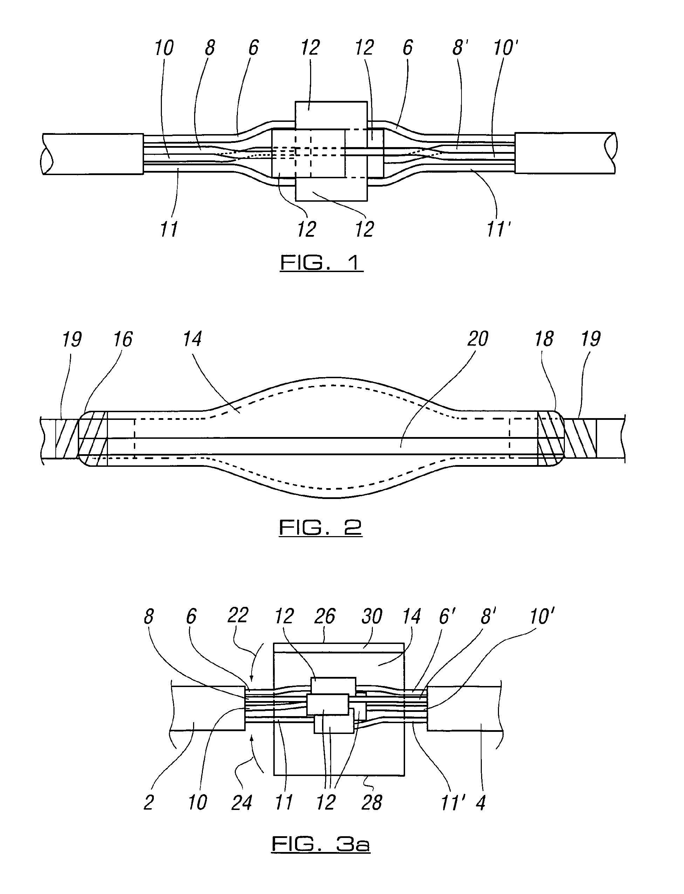

Figure 1 illustrates a typical joint between two conductor ends 2, 4. In this case, the conductors 6, 6', 8, 8', 10, 10' and 11, 11' are joined together by suitable connection means 12. While the electrical connection of the conductors 2, 4 has been achieved, as shown in Figure 1, there is still a need for the joint to be protected both to protect the same from damage and deterioration through, for example corrosion.

As a result, the joint needs to be encapsulated to allow the same to be protected.

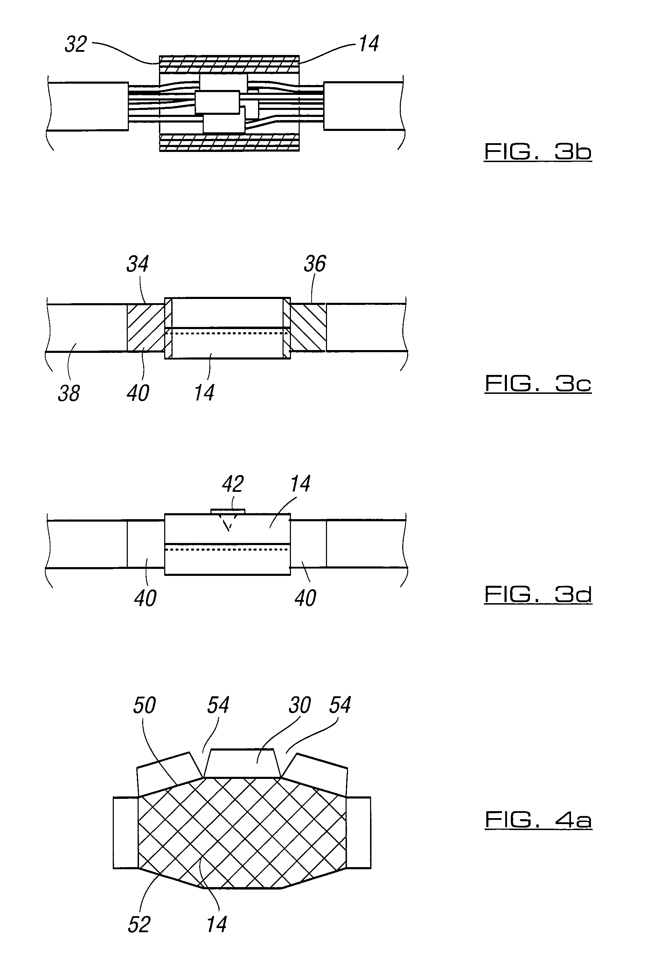

Figure 2 illustrates the joint encapsulated in accordance with the invention wherein there is provided an encapsulation means 14 within which the conductors 6, 6', 8, 8', 10, 10', 11, 11' and connectors 12 are housed. Two end pieces 16, 18 are also provided along with tape 19 to seal the ends. The join 20 of the encapsulating means 14 is also shown and how this is achieved will be illustrated with regard to Figures 3a to d, with Figure 3b showing the encapsulation means in cross section along line A-A.

In Figure 3a there is illustrated how the encapsulation means 14, is first placed to one side of the cables 6, 6', 8, 8', 10, 10', 11, 11' and connectors 12 and then wrapped round as illustrated by arrows 22, 24, such that the longitudinal edges 26, 28 meet. The edge 26 has an overlapping portion 30 which has an adhesive layer applied thereto such that when the same is brought into relationship with the edge 28, the protective layer for the adhesive can be removed and the extended portion 30 adhered to the edge 28 to join same together as illustrated in Figure 2.

Figure 3b illustrates the encapsulating means 14 in position and illustrates how the inner layer of the encapsulating means comprises the open weave material 32 and the outer layer 34 is a plastic impervious to liquid. If required an earth metal layer (not shown) can be provided between the layers 32, 34 To complete the encapsulation components, end pieces 16, 18 are also wrapped around the conductors in the gap 34 and 36 between the respective ends of the encapsulating means 14 and the ends of the insulation 38 of the respective cables as shown in Figure 3c. The end pieces can be of any suitable material but may also be formed of the open weave material and a plastic backing and then taped 40 to seal the same. Alternatively the tape 40 may only be used.

Thus, when the components are all placed in position, the external face of the encapsulation means and end pieces, are of plastic tape with the open weave material being enclosed between the plastic tape and the cable joint itself. At this stage, the resin, typically a polyurethane resin, can be introduced into the open weave material typically via a filler nozzle of the type shown in Figure 3d. When a suitable amount of resin has been introduced, the filler nozzle 42 may be removed and the resin is allowed to cure so as to completely encapsulate the joint.

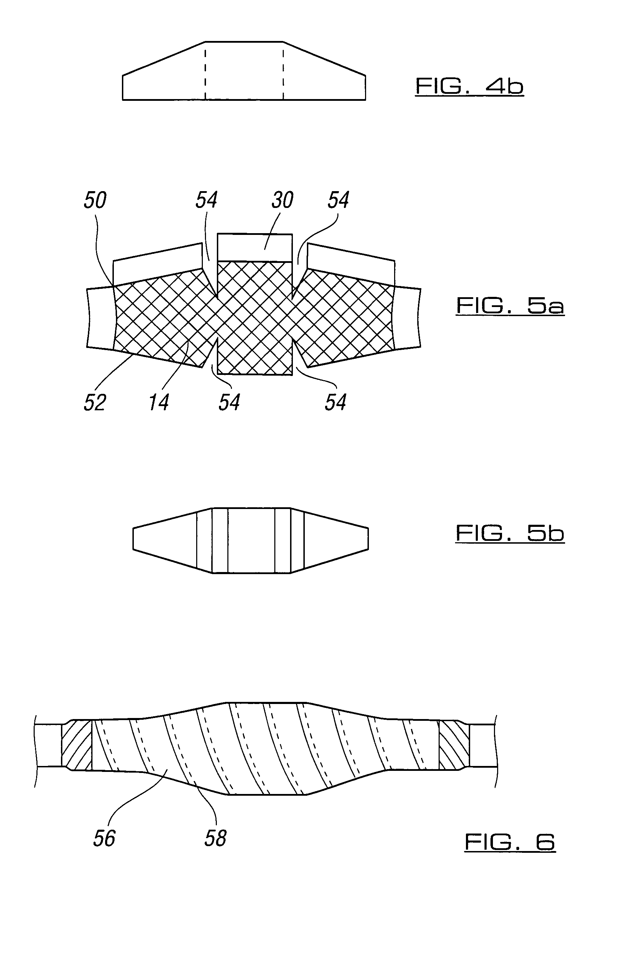

In order to ensure that the material of the encapsulating means 14 is provided with a minimum of wrinkles and folds when wrapped around the connections and cables, the same can be shaped. Figures 4a and b and 5a and b illustrate two possible manners in which the material is shaped. Figures 4a and b show how the longitudinal edges 50, 52 are shaped and how the free edge 30 of the plastics or backing layer is also slotted 54 to improve the fitment of the material when wrapped around.

Figures 5a and b illustrate a further arrangement where the slots 54 extend into the open weave material in addition to the shaping of the longitudinal edges 50, 52.

Although it is preferred that the encapsulation means 14 is wrapped around and joined along a single joint 20 as shown in Figure 2, it may also be possible for the encapsulating means to be provided in a strip form and to be wound round the joint as illustrated in Figure 6. In this case, an elongate edge 58 of the strip is provided with an extending portion of plastic backing such that the same can be attached to an adjacent portion of the strip when wound round the joint to joint the same together. The remainder of the process to form the joint is as described previously.

It will therefore be appreciated that the joint which is formed as herein described, is a significant improvement on the conventional joint arrangements in that the resin which can be used with the open weave material of the encapsulation means, is less harmful to jointers, is thinner and therefore can be introduced without the exertion of pressure and therefore reduces the risk of leakage. Furthermore the encapsulation means can be applied quickly and efficiently around the joint and is range taking.

## Claims

1. A means for encapsulating a join between at least two electrical conductors said means comprise an open weave material placed around the joined conductors to fully surround the same, retaining means to allow the open weave material to be held in position with respect to said joint, said open weave material having an outer layer when positioned on the joint which is substantially impervious and a resin which is introduced into the open weave material and retained therein by the outer layer to harden and form the encapsulated conductor joint.

2. An encapsulation means according to claim 1 **characterised in that** the outer layer is formed of plastics material.

3. An encapsulation means according to claim 1 **characterised in that** the outer layer is bonded to the open weave material prior to fixing the same around the joint.

4. An encapsulation means according to claim 1 **characterised in that** the outer layer extends beyond at least one edge of the open weave material.

5. An encapsulation means according to claim 4 **characterised in that** the surface of the extended portion of the outer layer which faces towards the open weave material has an adhesive layer.

6. An encapsulation means according to claim 1 **characterised in that** the open weave material is an insulating material.

7. An encapsulation means according to claim 1 **characterised in that** the open weave material is wrapped around the joint about an axis which runs parallel with the longitudinal axis of the conductor cables.

8. An encapsulation means according to claim 1 **characterised in that** the open weave material is of a length greater than the extremities of the joint which is formed and the longitudinal edges of the open weave material overlap along the length of the join and adhered together.

9. An encapsulation means according to claim 1 **characterised in that** the longitudinal edges are shaped along the longitudinal edge of the open weave material to allow a shaped encapsulation to be achieved which matches and accommodates the components of the joint.

10. An encapsulation means according to the preceding claim **characterised in that** slots are formed in the open weave material.

11. An encapsulation means according to claim 1 **characterised in that** the open weave material is provided in a strip form and is wound around the length of the cable joint.

12. An encapsulation means according to claim 1 **characterised in that** a single layer of open weave material is used.

13. An encapsulation means according to claim 1 **characterised in that** end pieces are provided to be wrapped around the cable conductors at the opposing ends of the encapsulation means once wrapped around the cable joint.

14. An encapsulation means according to the preceding claim **characterised in that** the end pieces enclose the start of insulation on the cables and the ends of the encapsulation means.

15. Encapsulation means according to claim 1 **characterised in that** a filling nozzle is provided which passes through the outer layer and into the open weave material to allow resin to be introduced through the filling nozzle into the open weave material.

16. Encapsulation means according to the preceding claim **characterised in that** a plurality of nozzles are provided at spaced intervals.

17. Encapsulation means according to the preceding claims **characterised in that** the resin which is used is a polyurethane resin.

18. Encapsulation means according to claim 1 **characterised in that** an earth screen is provided as a metallic mesh or thin metallic sheet incorporated into the encapsulation means.

19. Encapsulation means according to the claim 18
**characterised in that** the earth screen is incorporated in a sandwich configuration between the outer layer and the open weave material and connected to the earth wire or screen of the conductors which form the joint.

20. A method for encapsulating a joint between at least two electrical conductors, said method comprising the steps of placing a portion of open weave material around the conductor joint to enclose the same, joining the opposing longitudinal edges of the open weave material together, wrapping around the conductors at a location at the ends of the open weave material, end pieces, adding polyurethane resin through an outer layer of the encapsulation means into the open weave material and allowing the same to cure and harden to form the encapsulation.
